Europäisches Patentamt

European Patent Office

Office européen des brevets

(19)

(11) **EP 1 521 214 A2**

(12) **DEMANDE DE BREVET EUROPEEN**

(43) Date de publication:
**06.04.2005 Bulletin 2005/14**

(51) Int Cl.⁷: **G06T 11/00**

(21) Numéro de dépôt: **04104611.1**

(22) Date de dépôt: **23.09.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **01.10.2003 FR 0350631**

(71) Demandeur: **COMMISSARIAT A L'ENERGIE ATOMIQUE**
**75752 Paris Cedex 15 (FR)**

(72) Inventeurs:
• **Bonnet, Stéphane**
  **38100, Grenoble (FR)**
• **Grangeat, Pierre**
  **38330, Saint Ismier (FR)**

(74) Mandataire: **Poulin, Gérard et al**
**Société BREVATOME**
**3, rue du Docteur Lancereaux**
**75008 Paris (FR)**

(54) **Procédé de reconstruction d'image avec acquisition de donnees selon plusieurs modes d'imagerie et synchronisation des series d'images**

(57) Les mesures d'un objet mobile et notamment d'un être vivant sont entreprises par deux techniques, normalement d'atténuation de rayonnnement et d'émission de rayonnement, en synchronisation pour fournir des images de l'état de l'objet. Des champs de déplacements d'une phase à l'autre du mouvement sont estimées pour les deux techniques, mais les images finales obtenues par la technique d'émission sont améliorées par la connaissance du champ de déplacements obtenu par l'autre technique et qui est plus précis.

FIG. 1

**Description**

Cette invention ressortit à un procédé dans lequel une image d'un objet est estimée au moyen de deux séries de données, qu'on combine en faisant une synchronisation.

La prise d'images de l'intérieur d'objets et notamment d'êtres vivants peut se faire par plusieurs genres de procédés. Certains sont de nature atténuative, c'est-à-dire qu'on mesure l'atténuation d'un rayonnement traversant l'objet, et d'autres sont de nature émissive, c'est-à-dire qu'on recueille des particules ionisantes provenant d'un liquide radioactif ingéré préalablement par l'organisme à étudier. Dans les deux cas, des réseaux de détecteurs tournant autour de l'objet ou couvrant le tour de l'objet recueillent le rayonnement, et des images de l'objet sont obtenues en combinant les mesures des détecteurs prises à des angles différents selon des méthodes bien connues de reconstruction tomographique "(cf La tomographie" sous la direction de P.Grangeat Paris : Hermès Science Publications 2002 ibsn 2.7462-0356-1).

Certaines méthodes conviennent mieux pour obtenir certains genres de résultats. De façon typique, des images obtenues par atténuation peuvent indiquer la composition de l'objet à chaque endroit et permettre ainsi de bien dessiner les organes d'un être vivant et leurs contours. Les images obtenues par émission n'ont généralement pas cette possibilité mais permettent de distinguer les tissus sains, qui sont faiblement émissifs, des tissus malades, cancéreux par exemple, qui sont fortement émissifs. On peut qualifier les premières images d'anatomiques et les secondes de fonctionnelles. Elles sont complémentaires et leur superposition peut aider grandement au diagnostic. L'art antérieur comprend ainsi des dispositifs pour acquérir simultanément les deux genres d'images (comme dans l'article « Atténuation correction for a combined 3D PET/CT scanner » de Kinahan et autres, Med. Phys. 25(10), octobre 1998, p.2046 - 2053).

Un aspect qu'il convient de considérer concerne le mouvement des êtres animés au cours des mesures. Il est évident que le mélange de mesures prises pendant que l'objet bouge ne peut produire que des images brouillées si aucune précaution n'est prise. On s'est beaucoup intéressé à ce problème depuis plusieurs années, et plusieurs genres de solutions ont été proposés. Les unes consistent à prendre les mesures aussi vite que possible, en recourant par exemple à un réseau de détecteurs particulièrement nombreux qui entoure complètement l'objet à étudier, au lieu de se déplacer autour de lui. Un autre procédé consiste à s'arranger pour ne prendre des mesures qu'à un état à peu près invariable de l'objet, par exemple pour un même état du cycle cardiaque ou respiratoire ou d'un autre cycle biologique périodique. La première de ces méthodes est évidemment coûteuse en matériel et la deuxième est difficile à bien appliquer, et inopérante pour des mouvements non périodiques (animal bougeant, par exemple). Un autre genre de méthodes implique une correction numérique des mesures et des images en tenant compte du déplacement de l'objet entre chaque série de mesures. Les mouvements de l'objet sont estimés alors par des champs de déplacements de leurs points. Ces champs de déplacements peuvent être obtenus par des estimations sur des premières images en incluant éventuellement des hypothèses sur les mouvements. Cette dernière méthode est la plus susceptible de donner de bons résultats. Le brevet français 2 826 157 décrit un exemple.

Les méthodes de correction des images par estimation du champ de déplacements ont été appliquées avant tout aux images d'atténuation qui peuvent être prises rapidement et dont le contenu plus distinct donne plus de détails sur les mouvements de l'objet. Les images d'émission ont un contenu moins abondant du fait que les mesures sont plus dispersées dans le temps, et elles sont moins reconnaissables puisque les différentes catégories de tissus sont moins distinguées. Il est donc difficile de bien établir un champ de déplacements afin de s'en servir pour compenser les mouvements de l'objet et régulariser son image.

Il est pourtant proposé ici d'appliquer aux techniques d'émission une telle méthode de reconstruction d'images avec une compensation du mouvement de l'objet, grâce aux modalités ci-dessous.

Des images de l'objet sont prises à la fois par une technique d'émission et une technique d'atténuation. Les procédés ordinaires d'estimation du mouvement sont appliqués aux images obtenues par atténuation, en reconstituant une série d'images de l'objet étudié au moyen de jeux de mesures pris à des instants respectifs et fournissant donc des images floues, si elles ne sont pas compensées en mouvement, à cause du faible mouvement de l'objet, mais bien représentatives de l'état de l'objet à des instants respectifs. Les champs de déplacements des points de l'objet pour arriver à ces premières images sont obtenus.

Ces champs de déplacements sont ensuite appliqués aux mesures prises par la technique d'émission en général après avoir été modifiés ou adaptés par des procédés qui seront détaillés dans la suite de ce document. Ainsi, ces mesures d'émission peuvent aussi être corrigées pour compenser le mouvement et obtenir une image fonctionnelle finale améliorée. Il est simplement nécessaire de synchroniser les prises des mesures par les deux techniques sur une base de temps commune.

Les installations connues dans lesquelles les deux genres d'images ont été obtenus n'utilisent aucune combinaison analogue des jeux de mesures, et recourent à une simple juxtaposition des deux genres d'images obtenues indépendamment par superposition, ou utilisent tout au plus l'image d'atténuation pour une correction d'un autre genre des mesures d'émission, en compensant les atténuations à travers l'objet étudié, qui affectent aussi ces mesures.

Quoique l'invention soit aujourd'hui utile surtout dans le contexte particulier des couples d'acquisitions par atténuation et émission, elle peut être généralisée sans difficulté à n'importe quel couple d'acquisitions de mesures et ne saurait donc être limitée par les réalisations décrites ici.

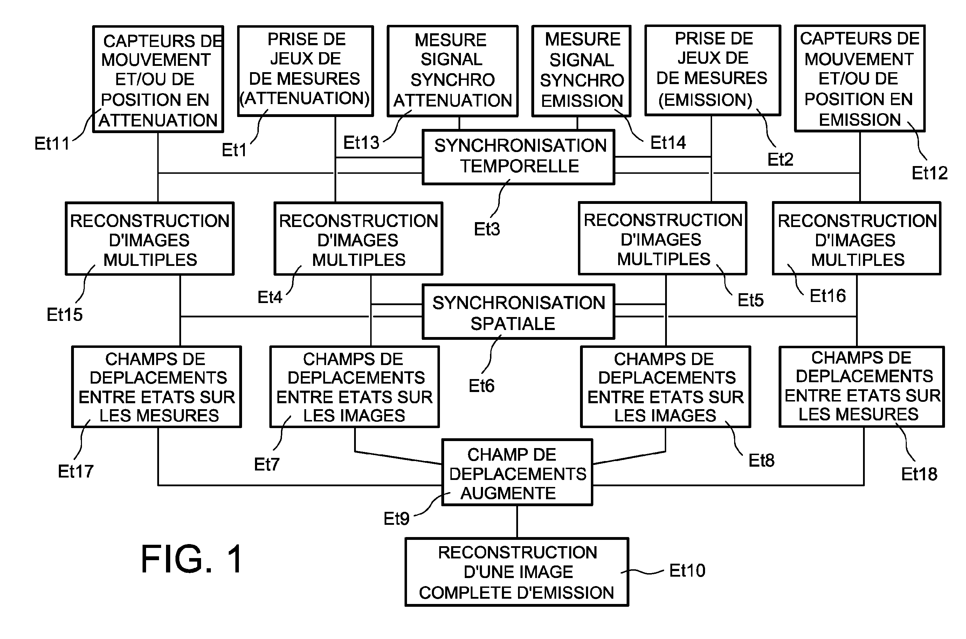

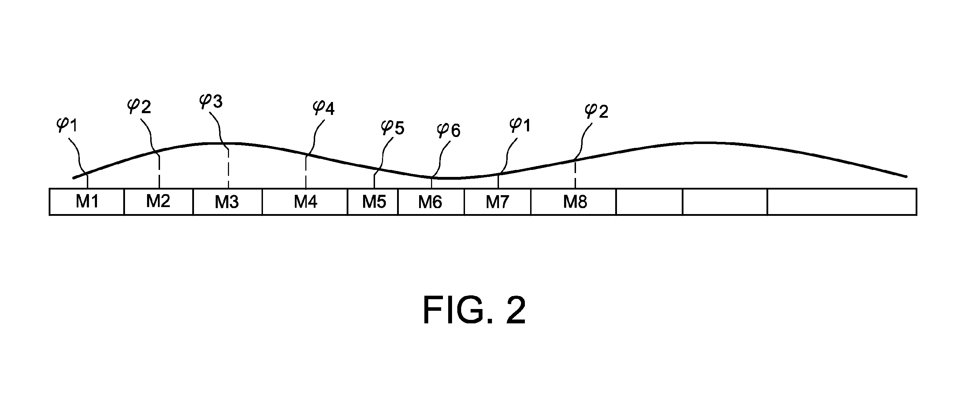

On va maintenant décrire l'invention plus dans le détail en recourant aux figures jointes, dont la figure 1 est un organigramme général et la figure 2 un diagramme temporel.

Cette invention concernant surtout l'imagerie médicale, l'hypothèse de l'examen d'un patient sera retenue ici. Il reçoit la consigne de respirer normalement et régulièrement pendant l'examen. Dans les procédés où aucune compensation de mouvement n'est faite, on lui demande au contraire de retenir sa respiration ou de l'arrêter à même état avant chaque mesure. Il a aussi ingéré un corps radio-pharmaceutique comme le FDG (fluoro-deoxy-glucose) par injection intraveineuse. Ce corps permet de suivre le métabolisme cellulaire du glucose en technique d'émission. D'autres corps émissifs sont utilisés pour d'autres applications.

Les mesures d'atténuation et d'émission sont entreprises aux étapes Et1 et Et2 de la figure 1. Pour chacune des catégories de mesures, des jeux de mesures sont pris à des instants successifs, qui ne sont pas généralement simultanés pour les deux catégories de mesures. Il est cependant nécessaire d'accomplir une synchronisation temporelle des jeux de mesures, au sein des deux séries et entre les deux séries d'après l'étape Et3. Un procédé utile pour cela peut consister en la mesure d'un mouvement du patient par un capteur indépendant tel qu'un capteur de respiration, un capteur de pression ou un electro-cardiogramme. Chacun des jeux de mesures est alors associé à un état déterminé du patient pendant lequel une mesure de son mouvement a été entreprise. Si cette mesure concerne un phénomène cyclique comme la respiration, les jeux de mesures peuvent être associés à des phases temporelles de ce mouvement comme le suggère le diagramme de la figure 2, dans laquelle six jeux de mesures M1 à M6 pris sur un cycle respiratoire sont associés à des phases moyennes $\varphi1$ à $\varphi6$.

Les étapes Et11 et Et12 de la figure 1 illustrent de telles utilisations de capteurs. Les capteurs de mouvements ou de position en général conviennent à ce procédé. Ils peuvent être en nombre quelconque. Certains peuvent être associés aux mesures d'atténuation et les autres aux mesures d'émission. Quand un jeu de mesures est pris, les capteurs associés enregistrent le signal de mouvement, etc. qu'ils reçoivent. Quand tous les jeux de mesures sont pris, des comparaisons entre les signaux enregistrés des différents capteurs permettent de placer les deux jeux de mesures à des emplacements déterminés sur une échelle de temps commune. Les instants des prises des mesures peuvent être déterminés si certains des capteurs mesurent aussi le temps, ou si un signal de mesure de temps autonome est pris et mesuré. Dans le procédé illustré, deux signaux de mesure de temps sont pris aux étapes préliminaires Et13 et Et14, et servent respectivement à déterminer les instants de prises de mesures avec les deux techniques et les instants de prises de mesures par les capteurs.

Enfin, la synchronisation temporelle peut être assurée par des procédés de corrélation entre les projections de l'image. L'article "Kymogram détection and Kymogram-correlated image recontruction from subsecond spiral computed tomography scans of the heart", par Kachelriess et autres, Med. Phys. 29 (7), juillet 2002, p.1489 à 1503, donne un exemple.

Après ces étapes Et1, Et2 et Et3 de prise de jeux de mesures et de synchronisation temporelle, on procède à une reconstruction d'images au moins partielles du patient par états multiples selon les étapes Et4 et Et5 pour chacune des techniques de mesures. Cela signifie que chacun des jeux de mesures, tel M1, est utilisé pour donner une image particulière en supposant le patient immobile pendant toute la durée de prise du jeu de mesures. Des moyens numériques classiques comme le filtrage et la rétroprojection sont appliqués. Les images partielles ainsi obtenues sont généralement fondées sur des données trop incomplètes pour être exactes, mais elles sont tout de même assez détaillées pour être comparées entres elles et permettre de déterminer les mouvements du patient d'une phase à la suivante. On pourra plus précisément appliquer les travaux de l'art antérieur donnés ci-dessous : P. Grangeat, A. Koenig, T. Rodet and S. Bonnet, « Theoretical framework for a dynamic cone-beam reconstruction algorithm based on a dynamic particle model », Phys. Med. Biol., vol. 47, n°15, pp. 2611-2625, August 2002, pour une technique d'atténuation et D. R Gilland, B. A. Mair, J. E. Bowsher and R.J Jaszczak, « Simultaneous reconstruction and motion estimation for gated cardiac ECT », IEEE Trans. Nucl. Sci., vol. 49, n°5, pp. 2344-2349, October 2002, pour une technique d'émission.

Les étapes Et15 et Et16 montrent que des états du patient peuvent aussi être définis à ces mêmes états d'après les renseignements fournis par les capteurs.

La synchronisation temporelle aurait pu être appliquée maintenant à ces images d'état plutôt qu'aux jeux de mesures.

Une synchronisation spatiale est entreprise à l'étape Et6. Il s'agit d'un recalage des catégories d'images au moins partielles et des renseignements des capteurs d'après lequel des points homologues, (c'est-à-dire correspondant à un même point du patient) doivent apparaître à la même position sur les deux catégories d'images. Cette étape qui permet de comparer les deux catégories d'images entre elles n'est pas originale et l'invention ne porte par sur elle.

Elle consiste à déterminer un opérateur de déformation D paramétré pour passer d'un référentiel associé aux images d'atténuation vers le référentiel associé aux images d'émission.

Cet opérateur est supposé invariant pour la durée de l'examen. On suppose également que la synchronisation temporelle est suffisamment précise et que les mouvements du patient (physiologiques) sont reproductibles.

Ainsi, on dispose à l'instant t d'une image d'atténuation $f_t$ et d'une image d'émission $g_t$. On cherche ensuite à identifier l'opérateur de déformation D en assurant la cohérence entre les deux images $f_t$ et gt sur les points de mesure.

$$D = \arg\min [E_{ima}(f_t, g_t, D)]$$

avec

$$E_{ima} (f_t, g_t, D) = \Sigma\phi (f_t(r) - g_t[D(r)])$$

ou $\phi$ est une fonction convexe et i désigne la position du pixel dans l'image.

Pour être général, on peut aussi introduire des mesures obtenues par des micro-systèmes qui renseignent sur la position du patient au niveau des capteurs (ou points de contrôle). On se place dans le cas où on dispose pour chaque type d'acquisition (à la fois d'atténuation et d'émission) d'images de la position de ces points de contrôle. On note $h^{att}$ et $h^{émi}$ de tels jeux de mesure délivrés par les capteurs de position. De tels capteurs utilisent des systèmes optiques par opposition aux capteurs de mouvement qui eux se basent sur des systèmes à base d'accéléromètres.

On peut aussi envisager d'utiliser des systèmes d'imagerie pour localiser ces capteurs en jouant sur leur atténuation ou en leur incorporant des sources radioactives pour la partie émission.

Si on dispose à l'instant t de ces informations supplémentaires $h^t_{att}$ et $h^t_{émi}$, alors on peut minimiser l'ensemble d'une seule fonctionnelle.

$$D = \arg\min [E_{ima}(f_t, g_t, D) + \alpha\, E_{capt} (h_t^{att}, h_t^{émi}, D)$$

où $\alpha$ est un coefficient de pondération.

Puisque D est supposé constant pour la durée de l'examen, sa détermination n'est pas limitée à un jeu d'images à l'instant t mais bien sur l'ensemble des instants à disposition.

D peut être un mouvement solide (de translation si le patient n'est pas replacé exactement à la même hauteur, rotation si le patient s'est légèrement tourné), ou un mouvement affine par exemple. La déformation D peut être aussi interprétée par analogie aux grilles de déformation des points de contrôle des techniques de déformation de forme libre.

Le cas simple est ensuite le cas où le patient ne bouge pas entre les techniques d'atténuation et d'émission et donc où D = identité.

Les étapes suivantes Et7 et Et8 concernent l'estimation du mouvement du patient d'une phase à l'autre pour chacune des deux catégories de mesures. Ici aussi on applique des procédés connus, notamment ceux du brevet français 2 736 454 ou l'article de Gilland indiqué plus haut. On obtient des champs de déplacements de points de l'objet d'une phase à une autre. Les champs de déplacements peuvent être obtenus de façon dense pour les mesures d'atténuation qui restituent bien les détails des images. Ils ne le peuvent en général pas être avec les mesures d'émission ; on peut les compléter en utilisant d'autres informations (provenant par exemple de capteurs de mouvement situés sur le patient) ou des hypothèses sur les mouvements de l'objet, comme l'absence de déformation (les mouvements sont réduits à des translations et des rotations), ou une déformation sans variation de volume, ou encore une déformation obéissant à des paramètres déterminés. Les mouvements du muscle cardiaque et de la cage thoracique peuvent ainsi être utilisés simplement.

Une autre façon de compléter les champs de déplacements est plus particulière à l'invention et revêt une importance spéciale. Elle concerne les mouvements cycliques comme la respiration ou le rythme cardiaque. Les mesures d'atténuation sont en général faites rapidement, en quelques cycles respiratoire ou même un seul, alors que les mesures d'émission sont faites beaucoup plus lentement, dix minutes étant souvent nécessaires. L'invention comprend alors un regroupement des jeux de mesures, surtout des mesures d'émission, d'après les phases $\phi$ considérées dans un seul cycle du mouvement, même si ces mesures concernent en réalité des cycles différents. C'est ce qu'on a encore illustré à la figure 2, où les jeux de mesures postérieurs à ceux du premier cycle respiratoire : M7, M8, etc. seront associés aux phases $\phi$1 et $\phi$2, etc. déjà mentionnées plutôt qu'aux phases $\phi$7 et $\phi$8, etc. qui s'en déduisent par un angle de $2\pi$ ou un de ses multiples. Les images partielles réduites à un petit nombre sont plus riches en contenu.

Si ce procédé de synchronisation sur un petit nombre de phases a une grande importance pratique, elle n'est cependant pas indispensable à la mise en oeuvre de cette invention, qu'on pourra appliquer à un patient subissant un mouvement quelconque, ou un mouvement cyclique.

Les étapes E17 et E18 illustrent que des champs de déplacements peuvent aussi être calculés d'après les mesures des capteurs.

L'étape suivante Et9 est une des plus importantes de l'invention. Elle consiste à obtenir un champ de déplacements dit augmenté par une synthèse des deux estimations de mouvements Et7 et Et8 obtenues précédemment et en utilisant éventuellement d'autres contributions provenant de mesures différentes ou d'hypothèses.

On expose ici le calcul du champ de déplacements augmenté en essayant cette fois d'être le plus général possible.

Pour être plus général, on peut aussi introduire des mesures de microsystèmes qui seraient en les deux obtenues soit en atténuation soit en émission soit en les deux ainsi qu'un opérateur de déformation D paramétré pour passer du référentiel en atténuation vers le référentiel en émission et pour des mouvements $m_{att}$ dans le référentiel en atténuation et $m_{émi}$ dans le référentiel en émission PET, de telle façon que

$$m_{att} (i) = m_{emi} (D (i)) - m_{émi} oD- (i)$$

On ajoute explicitement la formule de minimisation des informations obtenues non plus seulement par des systèmes d'imagerie mais aussi par des micro systèmes enseignant sur la position et/ou le mouvement du patient au niveau des capteurs (ou aussi à des points de contrôle).

Comme expliqué précédemment, on se place dans le cas où on dispose pour chaque acquisition en atténuation ou émission d'un jeu de mesures délivré par ces capteurs. On distingue toutefois le cas où on dispose d'images de position délivrées par le capteur (celles utilisées pour le recalage).

$$\begin{cases} h_1^{att} & h_2^{att} \\ h_1^{émi} & h_2^{émi} \end{cases} \text{ aux instants } t_1 \text{ et } t_2$$

de celui où on dispose directement du champs de déplacement en certains points de l'espace (comme les points de contrôle)

$$\begin{cases} m_{att} \\ m_{émi} \end{cases} \text{ entre les instants } t_1 \text{ et } t_2,$$

les deux champs étant reliés par la relation précédemment établie

$$m_{att} = m_{émi} \text{ o } D$$

Finalement, on cherche à assurer la cohérence entre :
Sur les images médicales

$$\begin{cases} (f_1, f_2, moD) & (g_1, g_2, m) \\ (mf, m_o D) & (mg, m) \end{cases} ;$$

E1 est une fonction exprimant la cohérence entre deux images au moins partielles d'émission g1 et g2 obtenues à l'étape Et5, et le champ de déplacements m qui doit les relier, et qui peut s'exprimer par E1 (g1, g2, m)=$\Sigma\phi$1[g1(r)-g2 (r+m(r))] où $\phi$1 est une fonction convexe et r désigne la position du pixel considéré sur l'image ; E9 est la connaissance a priori sur la régularité du champ de déplacements, avec par exemple E9 (m)=$\Sigma \phi$g (m(r)) ; et E3 et E4 reflètent la cohérence du champ de déplacements m par rapport aux champs de déplacements estimés pour les deux techniques, selon les formules E3(mg,m)=$\Sigma\phi$3(m(r)-mg(r)) et E4 (mF,moD)=$\Sigma\Phi$4 (moD (r)-mf (r) ) . Les fonctions $\phi$1, $\phi$2, $\phi$3 et $\phi$4 sont choisies assez librement et peuvent consister en des polynômes positifs convexes, l'essentiel étant de pouvoir trouver facilement par des procédés d'analyse numérique un champ de déplacements m qui concilie bien les résultats existants et qu'on puisse ainsi appliquer aux images au moins partielles d'émission.

En particulier, on ajoute explicitement une cohérence entre deux images d'atténuation $f_1$ et $f_2$ obtenues à l'étape Et4 et le champ de déplacements m qui doit les relier.

Sur les données des microsystèmes

$$\left|\begin{array}{ll}(h_1^{att},h_2^{att},moD) & (h_1^{émi},h_2^{Pémi},m)\\(m_{att},moD) & (m_{émi},m)\end{array}\right.$$

avec une certaine régularité sur m.

On peut minimiser l'ensemble dans une seule fonctionnelle qui serait (m,D) = arg min

$$\left\{\begin{array}{l}a\ E_1(g_1,\ g_2,\ m_{émi}\ +\ b\ E_2\ (f_1,\ f_2,\ moD)\ +\ c\ E_3(mg,\ m)\ +\ d\ E_4(mf,\ moD)\\+\ e\ E_5(h_1^{émi},\ h_2^{émi},\ m)\ +\ f\ E_6(h_1^{att},\ h_2^{att},\ moD)\ +\ g\ E_7(m_{émi},\ m)\ +\ h\ E_8(m_{att},\ moD)\\+\ i\ E_9(m)\end{array}\right\}$$

avec m, qui est le champ de déplacements augmenté.

Les inconnues sont m et les paramètres de la déformation D.

Cette déformation est justement celle qu'on recherche lors de l'étape de synchronisation spatiale.

On peut donc imaginer séparer le problème en identifiant d'abord D en assurant la cohérence entre ($h_1^{att}$, $h_1^{émi}$, D) , ($h_2^{att}$, $h_2^{émi}$, D) , etc.

Cette minimisation partielle a été décrite plus haut.

Du coup, la fonctionnelle ne porte plus que sur l'inconnue m.

Les microsystèmes peuvent jouer deux rôles :

- mettre en correspondance les deux techniques d'acquisition ;
- lever certaines ambiguïtés sur le calcul du champ de déplacement et de trajectoire pour au moins l'une des deux techniques d'acquisition.

En tout état de cause, l'utilisation d'une autre modalité d'imagerie de référence reste nécessaire pour pallier la mauvaise résolution spatiale et la qualité d'image médiocre (bruitée et définie seulement au niveau des régions de fixation du produit radioactif) qui caractérisent les images d'émission et qui conduiraient à des champs de déplacements de mauvaise qualité pour les zones d'intérêt.

L'inutilisation de capteurs impose e=f=g=h=o et conduit à une fonctionnelle se basant uniquement sur les informations obtenues par les systèmes d'imagerie.

Dans le cas particulier où il n'y a pas de capteurs de position et/ou de mouvements, ce champ de déplacements augmenté est noté m, et les champs de déplacements obtenus aux étapes Et7 et Et8 par mf et mg, la formule peut être simplifiée et devient : m=arg min {aE1(g1, g2,m)+bE2(f1, f2, moD)+cE3(mg,m)+dE4(mF, moD)+iEg(m)} ; a, b, c et d sont des coefficients de pondération.

Un cas important correspondrait à a=b=d=0 : les champs de déplacements estimés par la technique d'atténuation seraient alors appliqués tels quels aux images partielles estimées par la technique d'émission ; puisque ainsi qu'on l'a mentionné, le champ de déplacements obtenu par la technique d'atténuation est généralement beaucoup plus précis et exact.

Les champs de déplacements calculés aux étapes Et17 et Et18 peuvent aussi contribuer au calcul du champ de déplacements augmenté par le moyen d'autres coefficients de pondération. Toutefois, on doit souligner que l'utilisation de capteurs autonomes n'est pas indispensable si les jeux de mesures peuvent être placés autrement (par les étapes Et13 et Et14) dans une même échelle de temps ; les étapes Et11 et Et12, Et 15, Et16, Et 17 et Et 18 peuvent alors être supprimées du procédé.

Le procédé est complété par une exploitation de ce champ de déplacements augmenté pour reconstruire au moins une image définitive du patient d'après l'étape Et10. Pour cela, les images partielles sont combinées par addition en tenant compte des déplacements que leurs points ont subi d'une phase à l'autre afin de ne procéder à des additions que sur des états successifs des mêmes points. Des coefficients de pondération exprimant la confiance accordée à chaque point ou chaque image partielle peuvent être appliqués. L'image définitive plus nette que les images partielles (et composée d'acquisitions complètes entières du patient) est finalement obtenue. L'amélioration offerte par l'invention s'exprime avant tout sur l'image obtenue par les techniques d'émission. Si toutefois l'acquisition a été longue (c'est-à-dire effectuée sur plusieurs cycles), on ne reconstruit pas nécessairement une image unique mais une série d'images correspondant chacune à un état du cycle respiratoire (par exemple), et on applique l'estimation des champs de déplacements augmenté et la compensation du mouvement à ces images d'état. Une telle façon de procéder réduit l'influence d'un mouvement cyclique d'ensemble du patient et peut donner des résultats de meilleure qualité qu'une image unique obtenue avec tous les jeux de mesures cumulés sur le cycle et qui permettrait de mieux réduire le bruit des mesures par rapport au signal utile, mais produirait du flou dû à ce mouvement d'ensemble.

Les images de la technique d'émission peuvent encore être corrigées, de façon connue, par une correction des données d'émission corrigées ou non en mouvement, d'après l'atténuation qu'elles ont subie et qu'on peut déduire des images d'atténuation.

Des techniques d'atténuation et d'émission qui pourraient recevoir l'invention sont le CT (Tomographie à rayon x) ou l'IRM (Imagerie par résonance magnétique nucléaire) pour l'atténuation, et le SPECT (Single Photon Emission Computed Tomography) ou le TEP (tomographie à émission de positions) pour l'émission.

L'utilisation de micro-capteurs de position et de mouvement peut venir compléter une des technique ou se substituer à elle afin de fournir une référence sur le champ de déplacements à appliquer à la fin sur les images obtenues par les techniques d'émission.

L'intérêt de l'invention est évident pour les couples de mesures comprenant une technique d'atténuation et une technique d'émission de rayonnement, mais celle-là peut aussi être appliquée à d'autres situations de double mesure.

**Revendications**

1. Procédé de reconstruction d'images d'un objet mobile par une première technique d'acquisition de mesures, comprenant une reconstruction d'images au moins partielles de l'objet à des états respectifs de mouvement de l'objet, une estimation du mouvement de l'objet entre les états et une combinaison des images d'états en faisant des compensations du mouvement de l'objet d'après l'estimation, **caractérisé en ce que** l'estimation du mouvement de l'objet utilise au moins partiellement d'autres images de l'objet, obtenues pour lesdits états, par une deuxième technique d'acquisition de mesures.

2. Procédé de reconstruction d'images selon la revendication 1, **caractérisé en ce que** la reconstruction d'images au moins partielles de l'objet à des états respectifs de mouvement de l'objet comporte une étape de synchronisation temporelle appliquée aux mesures issus de la première technique d'acquisition et aux mesures issues de la deuxième technique d'acquisition.

3. Procédé de reconstruction d'images selon la revendication 2, **caractérisé en ce que** l'estimation du mouvement de l'objet entre les états comporte une étape de synchronisation spatiale appliquée aux images au moins partielles de l'objet à des états respectifs de mouvement de l'objet.

4. Procédé de reconstruction d'images selon la revendication 1, 2 ou 3, **caractérisé en ce que** la première technique d'acquisition de mesures est une technique d'imagerie fonctionnelle d'émission de rayonnement et la deuxième technique d'acquisition des mesures est une technique d'imagerie anatomique d'atténuation de rayonnement.

5. Procédé de reconstruction d'images selon la revendication 1 à 4, **caractérisé en ce qu'**il comprend une mesure d'un élément cyclique du mouvement de l'objet pour synchroniser les états sur des états périodiques de l'élément cyclique.

6. Procédé de reconstruction d'images selon la revendication 5, **caractérisé en ce que** les états périodiques regroupent des mesures faites sur plusieurs phases associées à différentes périodes de l'élément cyclique du mouvement, au moins pour les mesures acquises par la première technique.

7. Procédé de reconstruction d'images selon l'une quelconque des revendications précédentes, **caractérisé en ce qu'**il comporte l'emploi de capteurs autonomes de mouvement ou de position pour évaluer le mouvement de l'objet et/ou placer les mesures par les deux techniques d'acquisition et les états de l'objet sur une échelle de temps commune.

8. Procédé de reconstruction d'images selon la revendication 7, **caractérisé en ce que** le mouvement de l'objet est compensé aussi avec le mouvement évalué par les capteurs autonomes.

FIG. 1

EP 1 521 214 A2

FIG. 2

EP 1 521 214 A2